# EUROPÄISCHE PATENTANMELDUNG

(11) **EP 4 332 556 A2**
(43) Veröffentlichungstag der Anmeldung: **06.03.2024**
(21) Anmeldenummer: 23192939.9
(22) Anmeldetag: 23.08.2023
(51) Int. Cl.: G01N 21/90, B67B 3/26, G01N 21/88

(54) **TRAGRINGZENTRIERUNG FÜR VERSCHLUSSINSPEKTION**

(30) Priorität: 05.09.2022 DE 102022122476
(71) Anmelder: Krones AG, 93073 Neutraubling (DE)
(72) Erfinder: Bock, Thomas, 93073 Neutraubling (DE)
(74) Vertreter: Bittner, Bernhard

(57) **Zusammenfassung**

Verfahren zum Inspizieren von mit Verschlüssen (15) versehenen Behältnissen (10) wobei die Verschlüsse einen Deckelabschnitt (15a) und einen um eine Mündung der Behältnisse (10) umlaufenden Umfangsrand (15b) aufweisen und die Behältnisse ein in einem Bereich der Mündung der Behältnisse angeordnetes rotationssymmetrisches Element (10a) aufweisen, wobei der Verschluss in einer Längsrichtung des Behältnisses (L) oberhalb des rotationssymmetrischen Elements endet, wobei die Behältnisse (10) mittels einer Transporteinrichtung (2) entlang eines vorgegebenen Transportpfads transportiert werden und während dieses Transports die mit den Verschlüssen (10a) versehenen Mündungsbereiche der Behältnisse von einer Beleuchtungseinrichtung (6) beleuchtet werden und wenigstens eine Bildaufnahmeeinrichtung (4) wenigstens zwei Bilder der mit den Verschlüssen (10a) versehenen Mündungsbereiche der Behältnisse (10) aufnimmt, dadurch gekennzeichnet, dass die Bildaufnahmeeinrichtung wenigstens zwei ortsaufgelöste Bilder eines Abschnitts des Umfangsrandes (15b) sowie wenigstens eines Abschnitts des rotationssysmmetrischen Elements aufnimmt und wenigstens aus diesen Bildern eine Gesamtinformation abgeleitet wird wobei aus wenigstens diesen Bildern ein für eine Relativposition des Verschlusses (15) gegenüber dem Behältnis (10) charakteristischer Wert bestimmt wird, wobei diese Gesamtinformation und/oder der charakteristische Wert mittels einer aus den Bildern bestimmten Position des rotationssymmetrischen Elements korrigiert wird.

## Beschreibung

Die vorliegende Erfindung bezieht sich auf ein Verfahren und eine Vorrichtung zum Inspizieren von mit Verschlüssen versehenen Behältnissen. Derartige Verfahren und Vorrichtungen sind aus dem Stand der Technik seit langem bekannt. In der getränkeherstellenden Industrie werden üblicherweise Getränkeflaschen mit Verschlüssen versehen und anschließend weiter transportiert oder beispielsweise mit Etiketten versehen. Bei dem Anbringen von Verschlüssen an Behältnissen kann es zu diversen Problemen kommen. So können beispielsweise die Verschlüsse schief auf Behältnissen sitzen oder bei dem Aufschraubvorgang zerstört oder beschädigt worden sein.

Daher sind aus dem Stand der Technik Vorrichtungen und Verfahren bekannt, welche den ordnungsgemäßen Sitz eines ordnungsgemäßen Verschlusses an einem Behältnis prüfen. Dabei ist es aus dem internen Stand der Technik der Anmelderin bekannt, Bilder der Verschlüsse aufzunehmen und diese beispielsweise über eine Abwicklungsdarstellung über 360° darzustellen. Bei diesen Abwicklungen kann es teilweise zu fehlerhaften Bildern kommen, welche jedoch nicht durch fehlerhafte Behältnisse oder einen fehlerhaften Sitz verursacht sind, sondern beispielsweise durch aus unterschiedlichen Gründen schiefe Aufnahmen des Behältnisses.

So ist es bekannt, dass eine Rekonstruktion einer Abwicklung aus Kamerabildern durch Bilder und Modellannahmen der Aufnahmesituation und des Körpers beispielsweise des Behältnisses und des Verschlusses erfolgen.

Auch ist es aus dem internen Stand der Technik der Anmelderin bekannt, dass durch eine Kalibration vorab ein Modell einer Aufnahmesituation ermittelt wird. Diese sollte sich während der Produktion bzw. der Inspektion eines Behälterstroms nicht ändern.

Allerdings kann es dazu kommen, dass sich bei einer Inspektion des Behälterstroms die Position des Körpers, d. h. des Behältnisses durch Trägerversatz oder Versatz eines Behälters auf der Transporteinrichtung ändert. Daneben kann es auch durch unterschiedliche Höhen der Behälter oder durch schiefe Mundstücke zu einer Änderung der Aufnahmesituation kommen. Im Stand der Technik wird üblicherweise eine Position und eine Hochachse des Behältnisses ermittelt.

Der vorliegenden Erfindung liegt die Aufgabe zugrunde, eine derartige Behältnissituation besser aufnehmen zu können. Dabei soll eine verfeinerte Betrachtung von unterschiedlichen Fehlersituationen ermöglicht werden. Dies wird erfindungsgemäß durch die Gegenstände der unabhängigen Patentansprüche erreicht. Vorteilhafte Ausführungsformen und Weiterbildungen sind Gegenstand der Unteransprüche.

Die Erfindung bezieht sich auf ein Verfahren zum Inspizieren von mit Verschlüssen versehenen Behältnissen wobei die Verschlüsse einen Deckelabschnitt und einen um eine Mündung der Behältnisse umlaufenden Umfangsrand- bzw. Umfangswandabschnitt aufweisen und die Behältnisse ein in einem Bereich der Mündung der Behältnisse angeordnetes (insbesondere umlaufendes) rotationssymmetrisches Element aufweisen und wobei der Verschluss in einer Längsrichtung des Behältnisses oberhalb des rotationssymmetrischen Elements endet.

Die Behältnisse werden mittels einer Transporteinrichtung entlang eines vorgegebenen Transportpfads transportiert und während dieses Transports werden die mit den Verschlüssen versehenen Mündungsbereiche der Behältnisse von einer Beleuchtungseinrichtung beleuchtet und wenigstens eine Bildaufnahmeeinrichtung nimmt wenigstens zwei (insbesondere ortsaufgelöste) Bilder der mit den Verschlüssen versehenen Mündungsbereiche der Behältnisse auf.

Erfindungsgemäß nimmt die Bildaufnahmeeinrichtung wenigstens zwei ortsaufgelöste Bilder eines Abschnitts des Umfangrands sowie wenigstens eines Abschnitts des rotationssymmetrischen Elements auf und aus wenigstens diesen (wenigstens zwei) Bildern wird eine Gesamtinformation abgeleitet wobei aus wenigstens diesen Bildern ein für eine Relativposition des Verschlusses gegenüber dem Behältnis (und/oder ein für einen Zustand des Verschlusses) charakteristischer Wert bestimmt wird.

Weiterhin wird diese Gesamtinformation und/oder der charakteristische Wert mittels einer aus den Bildern bestimmten Position des rotationssymmetrischen Elements korrigiert.

Es wird damit bei diesem erfindungsgemäßen Verfahren vorgeschlagen, dass zur Ermittlung der Position des Verschlusses an dem Behältnis auch der Tragring des Behältnisses (und/oder dessen Position) mitberücksichtigt wird. Dabei ist zu berücksichtigen, dass dieser Tragring üblicherweise einteilig mit dem Behältnis verbunden ist.

Bei einem weiteren erfindungsgemäßen Verfahren zum Inspizieren von mit Verschlüssen versehenen Behältnissen wobei die Verschlüsse einen Deckelabschnitt und einen um eine Mündung der Behältnisse umlaufenden Umfangsrand (bzw. eine entsprechende Umfangswandung) aufweisen, werden die Behältnisse mittels einer Transporteinrichtung entlang eines vorgegebenen Transportpfads transportiert und während dieses Transports die mit den Verschlüssen versehenen Mündungsbereiche der Behältnisse von einer Beleuchtungseinrichtung beleuchtet und wenigstens eine Bildaufnahmeeinrichtung nimmt wenigstens ein Bild der mit den Verschlüssen versehenen Mündungsbereiche der Behältnisse auf.

Erfindungsgemäß nimmt die Bildaufnahmeeinrichtung wenigstens ein ortsaufgelöstes Bild eines Abschnitts des Umfangsrands der Verschlüsse auf und dabei wird wenigstens eine an dem Umfangsrand vorhandene Struktur erfasst und unter Berücksichtigung wenigstens eines für diese Struktur charakteristischen Werts wird ein für eine Relativposition des Verschlusses gegenüber dem Behältnis und/oder für den Verschluss charakteristischer Wert bestimmt.

Diese letztgenannte Erfindung beruht auf der Idee, dass derartige Behältnisverschlüsse oftmals eine Struktur wie etwa eine Riffelung oder dergleichen aufweisen. Diese Struktur wird verwendet, um einen für die Hochsitz des Verschlusses charakteristischen Wert zu erfassen.

Bevorzugt wird jeweils zum Inspizieren der Verschlüsse ein diffuses Auflichtverfahren verwendet, d. h. insbesondere, dass die Bildaufnahmeeinrichtung und die Beleuchtungseinrichtung die Behältnisse und deren Verschlüsse aus den gleichen oder ähnlichen Richtungen betrachten, bzw. beleuchten. Besonders bevorzugt beleuchtet die Beleuchtungseinrichtung das Behältnis und den Verschluss mittels einer ringförmigen Lampe, welche bevorzugt in Behälterlängsrichtung konzentrisch über dem Verschluss angebracht ist und die Bildaufnahmeeinrichtung nimmt ein entsprechendes Bild von dem so beleuchteten Verschluss auf.

Besonders bevorzugt erfolgt eine Beleuchtung des Behältnisses und Behältnisverschlusses mit Weißlicht und insbesondere mit Weißlicht-LEDs. Besonders bevorzugt wird als Beleuchtung eine Blitzlampenbeleuchtung verwendet. Bevorzugt ist die Bildaufnahme auf die Beleuchtung getriggert. Besonders bevorzugt wird auch die Bildaufnahme - etwa mit einer Lichtschranke - getriggert.

Bei einem besonders bevorzugten Verfahren werden die Behältnisse während ihrer Inspektion entlang eines geradlinigen oder kreisförmigen Transportpfads und insbesondere entlang eines geradlinigen Transportpfads transportiert.

Wie oben erwähnt, kann der Umfangsrand des Verschlusses auch als Umfangswandung bezeichnet werden. Besonders bevorzugt weist dieser Umfangsrand bzw. die Umfangswandung an ihrer Innenoberfläche ein Innengewinde auf, welches entsprechend auf ein Außengewinde des Behältnisses aufgeschraubt werden kann. Bei der genannten Struktur kann es sich wie oben erwähnt besonders bevorzugt um eine Struktur handeln, die sich aus einer Vielzahl von vertikalen Vorsprüngen oder vertikalen Erhebungen ergibt. Diese können dabei in vorgegebener Weise beispielsweise gleichmäßig über den Umfangsrand verteilt sein.

Bei einem bevorzugten Verfahren wird die oben erwähnte Gesamtinformation aus Informationen der wenigstens zwei Bildern abgeleitet. Die Gesamtinformation kann beispielsweise eine Information sein, ob der Behältnisverschluss korrekt an dem Behältnis angeordnet ist.

Bei dem rotationssysmmetrischen Element handelt es sich insbesondere um ein Element, welches in einem Sollzustand rotationssymmetrisch bezüglich einer Längsrichtung des Behältnisses ist.

Bei dem Behältnis handelt es sich bevorzugt um ein Kunststoffbehältnis oder ein Glasbehältnis.

Bei einem bevorzugten Verfahren ist das rotationssysmmetrische Element aus einer Gruppe von rotationssysmmetrischen Elementen ausgewählt, welche einen Tragring eines Kunststoffbehältnisses, eine Mündungseichel, insbesondere eines Glasbehältnisses, ein Gewindemundstück, insbesondere eines Glasbehältnisses, eine umlaufende Ausnehmung zum Greifen des Behältnisses, einen Sicherungsring und dergleichen enthält.

Bevorzugt ist dieses rotationssysmmetrische Element umlaufend bezüglich der Längsrichtung ausgebildet, es wäre jedoch auch denkbar, dass das rotationssymmetrische Element mit Unterbrechungen oder Ausnehmungen ausgebildet ist. Auch könnten an dem rotationssymmetrischen Element Markierungen oder Ausnehmungen angeordnet sein, welche jedoch im Rahmen der Erfindung bei der Beurteilung der Rotationssymmetrie nicht berücksichtigt werden.

Bei einem bevorzugten Verfahren weisen die Behältnisse einen in einem Bereich der Mündung der Behältnisse angeordneten Tragring (bzw. allgemein ein rotationssymmetrisches Element) auf und der Verschluss endet in der Längsrichtung des Behältnisses oberhalb dieses rotationssymmetrischen Elements und bevorzugt nimmt die Bildaufnahmeeinrichtung ein Bild dieses rotationssymmetrischen Elements auf. Besonders bevorzugt nimmt wie oben erwähnt die Bildaufnahmeeinrichtung ein Bild sowohl des Verschlusses als auch des rotationssymmetrischen Elements auf.

Bei einem weiteren bevorzugten Verfahren schließt der Abschnitt des Umfangsrandes und/oder des rotationssymmetrischen Elements (von dem die Bildaufnahmeeinrichtung das Bild aufnimmt) einen Winkel ein, der größer ist als 90°, bevorzugt größer als 120°, bevorzugt größer als 140°, bevorzugt größer als 180°, bevorzugt größer als 220°, bevorzugt größer als 270° und besonders bevorzugt größer als 300° und besonders bevorzugt größer als 330°. Besonders bevorzugt werden 360° dieses Umfangsrandes erfasst. Hierzu können auch, wie unten genauer beschrieben, mehrere Bilder aufgenommen werden. Auf diese Weise wird besonders bevorzugt eine vollständige Abwicklung des Umfangsrandes betrachtet.

Bei einem weiteren bevorzugten Verfahren nimmt wenigstens eine zweite Bildaufnahmeeinrichtung wenigstens ein ortsaufgelöstes Bild eines Abschnitts des Umfangsrandes und/oder eines Abschnitts des rotationssymmetrischen Elements auf. Bei diesem Verfahren werden mindestens zwei Bildaufnahmeeinrichtungen eingesetzt.

Besonders bevorzugt liegen beide Aufnahmen innerhalb eines Zeitfensters, welches geringer ist als 1 s, bevorzugt geringer als 0,5 s, bevorzugt geringer als 0,3 s, bevorzugt geringer als 0,2 s, bevorzugt geringer als 0,1 s. So ist es möglich, dass die erste und die zweite Bildaufnahmeeinrichtung die Bilder im Wesentlichen gleichzeitig aufnehmen oder lediglich um ihren Blitzlampeneinsatz versetzt.

Bevorzugt werden bei diesem Verfahren die zwei oben genannten Bilder mit den beiden Bildaufnahmeeinrichtungen aufgenommen.

Bevorzugt nehmen die beiden Bildaufnahmeeinrichtungen die jeweiligen ortsaufgelösten Bilder zeitgleich auf.

Bei einem weiteren bevorzugten Verfahren wird wenigstens aus dem von der ersten Bildaufnahmeeinrichtung und dem von der zweiten Bildaufnahmeeinrichtung aufgenommenen Bild ein Abwicklungsbild gebildet. Dies bedeutet, dass die aufgenommenen Bilder bearbeitet und aneinandergesetzt werden, um so ein größeres Bild, beispielsweise in Form eines Panoramabildes des Behältnisverschlusses und/oder des Behältnisses zu erzeugen.

Bei einem weiteren bevorzugten Verfahren dient dieses Gesamtbild zur Ermittlung der Gesamtinformation und/oder zur Ermittlung des charakteristischen Wertes. Daneben kann die Gesamtinformation auch das so gebildete Abwicklungsbild sein.

Bevorzugt handelt es sich bei der Gesamtinformation um eine Zusammenstellung und insbesondere eine definierte Zusammenstellung der zwei oder mehrerer aufgenommener Bilder wie insbesondere ein Abwicklungsbild und/oder ein Panoramabild.

Besonders bevorzugt wird das Behältnis oder der Behältnisverschluss mit wenigstens drei Bildaufnahmeeinrichtungen und bevorzugt mit wenigstens vier Bildaufnahmeeinrichtungen aufgenommen. Bevorzugt wird aus den von diesen Bildaufnahmeeinrichtungen aufgenommenen Bildern ein Abwicklungsbild erstellt (welches in diesem Fall die erwähnte Gesamtinformation bildet).

Die Gesamtinformation kann jedoch auch aus einer Vielzahl von Werten bestehen, welche sich durch die Auswertung der wenigstens zwei Bilder ergeben.

Besonders bevorzugt wird aus dem Abwicklungsbild und/oder der Gesamtinformation der für eine Relativposition des Verschlusses gegenüber dem Behältnis charakteristische Wert bestimmt. Dabei gibt besonders bevorzugt das Abwicklungsbild eine 360° (insbesondere bezüglich einer Längsrichtung des Behältnisses) Darstellung des Umfangsrandes und/oder des Tragrings wieder und bevorzugt sowohl des Umfangsrands als auch des Tragrings.

Besonders bevorzugt werden zur Bestimmung einer Position des rotationssymmetrischen Elements bestimmte Stützpunkte dieses rotationssymmetrischen Elements bestimmt.

Bevorzugt wird zur Bestimmung dieser Position ein erster seitlicher Außenrand (und/oder eine Position desselben), etwa ein linker Rand des rotationssysmmetrischen Elements (insbesondere durch eine Bildauswertung bestimmt.

Bevorzugt wird zur Bestimmung dieser Position ein zweiter seitlicher Außenrand und/oder eine Position desselben), etwa ein rechter Rand des rotationssysmmetrischen Elements (insbesondere durch eine Bildauswertung) bestimmt.

Bevorzugt wird zur Bestimmung dieser Position ein Zentralbereich des rotationssymmetrischen Elements bestimmt (und/oder eine Position desselben), etwa eine Symmetrieachse und/oder eine Symmetrieebene (insbesondere durch eine Bildauswertung).

Bei einem weiteren bevorzugten Verfahren werden auch Stützpunkte des Behältnisverschlusses bestimmt, insbesondere solche, aus denen sich die Position des Beältninsverschlusses bestimmen lässt.

So kann auch hier ein Rand des Behältnisverschlusses oder eine Symmetrieachse des Behältnisverschlusses bestimmt werden, was insbesondere durch eine Bildauswertung erfolgen kann.

Besonders bevorzugt wird der oben genannte Wert aus einer Position und/oder Lage des rotationssymmetrischen Elements (und/oder unter Berücksichtigung dieser Position) bestimmt, wobei bevorzugt ein Normalenvektor (des Tragrings) bestimmt wird.

Auf diese Weise kann eine Orientierung des rotationssysmmetrischen Elements, insbesondere des Tragrings ermittelt werden, die wiederum auch bei der Auswertung des Abwicklungsbildes berücksichtigt wird.

Hierbei wird berücksichtigt, dass die Position des Tragrings und/oder eine Tragringzentrierung auch die Ebenenlage des aufgenommenen Bildes bzw. des Bildes des Umfangsrandes bestimmt.

Bei einem weiteren bevorzugten Verfahren wird ein Beobachtungssystem, welches wenigstens zwei Bildaufnahmeeinrichtungen aufweist, kalibriert.

Bevorzugt erfolgt diese oder eine Kalibrierung derart, dass eine Relativposition einer ersten Bildaufnahmeeinrichtung bezüglich einer zweiten Bildaufnahmeeinrichtung bestimmt wird.

Bevorzugt werden die Relativpositionen sämtlicher Bildaufnahmeeinrichtungen, welche für die Inspektion verwendet werden, insbesondere die Relativpositionen dieser Bildaufnahmeeinrichtungen zueinander bestimmt und insbesondere im Rahmen einer Kalibrierung bestimmt.

Besonders bevorzugt erfolgt eine Auswertung der aufgenommenen Bilder auch unter Berücksichtigung dieser wenigstens einen Relativposition.

Bei einem bevorzugten Verfahren wird eine Ebene des rotationssymmetrischen Elements im Raum bestimmt. Bevorzugt wird diese Ebene für die Korrektur verwendet.

Bevorzugt erfolgt eine Rekonstruktion einer Abwicklung aus Kamerabildern durch die Bilder und/oder Modellaufnahmen der Aufnahmesituation. Bei einem bevorzugten Verfahren wird, wie oben beschrieben durch eine Kalibration vorab ein Modell der Aufnahmesituation ermittelt. Diese ändert sich insbesondere nicht während der Produktion und auch nicht während der Inspektion des Behälterstroms.

Bei der Inspektion des Behältnisstroms ändert sich die Position des Körpers durch Trägerversatz oder einen Versatz des Behältnisses beispielsweise auf einer Transporteinrichtung. Daneben kann es auch zu einer Änderung durch unterschiedliche Höhen oder durch schiefe Mundstücke der Behältnisse kommen. Im Stand der Technik wird üblicherweise die Position und eine Hochachse ermittelt.

Im Rahmen der vorliegenden Erfindung wird nunmehr vorgeschlagen, dass die Position des Verschlusses am Mundstück um die Information der exakten Höhenposition des Tragrings (bzw. des rotationssymmetrischen Elements) und/oder dessen Orientierung ergänzt wird, wobei hierbei insbesondere ein Normalenvektor des rotationssymmetrischen Elements bestimmt wird.

Üblicherweise wird der Behältnisverschluss auf das Mundstück des Behältnisses aufgebracht und insbesondere aufgeschraubt, damit ist das bei der Bildaufnahme aufgenommene starre Element das Mundstück. Nach dem Aufbringen des Behältnisverschlusses kann jedoch immer noch die Lage des Mundstückes durch die Bestimmung der Höhe der Ebenenlage und die Position des Tragrings bzw. des rotationssymmetrischen Elements ermittelt werden. Dies ist ein wesentlicher Aspekt der Erfindung.

Auf diese Weise ist die Rekonstruktion des Verschlusses und des Tragrings frei von den verändernden Einflüssen zum Zeitpunkt der Aufnahme.

Besonders bevorzugt ist die exakte Bestimmung der relativen Position des Verschlusses bzw. der Verschlusskappe zu dem Mundstück in einer Rekonstruktionsabbildung, d. h. einer 360° Abbildung des Verschlusses und des Tragrings möglich, insbesondere weil diese Bestimmung frei von Störeinflüssen ist.

Bei einem weiteren bevorzugten Verfahren wird ein aufgenommenes Bild und insbesondere ein Abwicklungsbild unter Berücksichtigung einer Position des rotationsymmetrischen Elements bzw. des Tragrings korrigiert. Insbesondere wird dabei ein Normalenvektor des rotationssymmetrischen Elements berücksichtigt. Dies wird untenstehend unter Bezugnahme auf die Figuren genauer erläutert.

Bei einem weiteren vorteilhaften Verfahren weisen die Behältnisse ein in einem Bereich der Mündung der Behältnisse angeordnetes rotationssymmetrisches Element aufweisen, wobei der Verschluss in einer Längsrichtung des Behältnisses oberhalb des rotationssymmetrischen Elements endet und bevorzugt die Bildaufnahmeeinrichtung ein Bild dieses rotationssymmetrischen Elements aufnimmt.

Bei einem weiteren bevorzugten Verfahren werden mittels wenigstens drei und bevorzugt mittels wenigstens vier Bildaufnahmeeinrichtungen Bilder des Umfangsrandes und des Verschlusses aufgenommen und bevorzugt diese Bilder zu einem Abwicklungsbild zusammengesetzt.

Bei einem weiteren bevorzugten Verfahren nimmt wenigstens eine Bildaufnahmeeinrichtung die Behältnisse aus einer Richtung auf, die mit einer senkrecht zu der Längsrichtung des Behältnisses stehenden Richtung einen Winkel von weniger als 30°, bevorzugt weniger als 20°, bevorzugt weniger als 10° einschließt.

Bei einem weiteren bevorzugten Verfahren wird mit wenigstens einem Bild eine Struktur oder eine Außenoberfläche des Umfangsrandes erfasst und wie unten genauer beschrieben werden hieraus Werte abgeleitet.

Bei einem weiteren bevorzugten Verfahren werden durch Kalibration Abbildungsparameter ermittelt. Beide Vorgehensweisen fördern insbesondere die Auswertung bzw. Beurteilung der an dem Umfangsrand befindlichen Struktur.

Bei einem besonders bevorzugten Verfahren werden Graustufenbilder oder farb(kodierte) Bilder aufgenommen.

Bei einem weiteren vorteilhaften Verfahren wird wenigstens ein farbkodiertes Bild und werden bevorzugt eine Vielzahl von farbkodierten Bildern aufgenommen. Besonders bevorzugt wird wenigstens eine Maßnahme zur Kontrasterhöhung der aufgenommenen Bilder durchgeführt.

Besonders bevorzugt ist diese wenigstens eine Maßnahme aus einer Gruppe von Maßnahmen ausgewählt, welche eine Verarbeitung und insbesondere eine Vorverarbeitung eines Bildes in einem Helligkeitskanal, eine Verarbeitung und insbesondere eine Vorverarbeitung des Bildes in einem Komplimentärkanal, eine Verarbeitung und insbesondere eine Vorverarbeitung des Bildes in einem Sättigungskanal, Kombinationen aus diesen Maßnahmen und dergleichen enthält.

Auch für dieses Verfahren ist zu berücksichtigen, dass der Verschlusskappensitz entscheidend für den korrekten Hochstand, jedoch nicht für die andren Komponenten eines intakten Verschlusses ist.

Im Stand der Technik wurde üblicherweise ein Durchlichtverfahren verwendet und es wurde ein Schattenriss bzw. dessen Silhouette ausgewertet. Dabei trat bisweilen das Problem auf, dass eine Verschlusskappe von den anderen Elementen, wie einem Verbindungselement und/oder dem Sicherungsring nicht möglich oder nur eingeschränkt unterscheidbar ist. Durch eine Positionsbestimmung im Schattenriss der oberen Deckelgeometrie kann beispielsweise eine Wölbung oder Verformung des Deckels das Bild nach dem Aufbringen des Mundstücks verfälschen. Durch die Auswertung eines Spalts zwischen dem Tragring und/oder dem rotationssymmetrischen Element und dem Sicherungsring können sich ebenfalls Verfälschungen ergeben. Daneben sind diese Betrachtungsweisen im Stand der Technik nur möglich, wenn der Verschluss umlaufend gleich aufgebaut wird, d. h. in allen vertikalen Schnitten die gleiche äußere Schnittform beibehält.

Der Ansatzpunkt nunmehr besteht darin, Strukturen oder Glanzpunkte auf der äußeren Mantelfläche der Verschlusskappe auszuwerten. Hierbei ist es möglich, dies in den Einzelansichten oder in einer errechneten 360° Abwicklung durchzuführen.

Wie oben erwähnt, können dabei mittels einer abbildenden Optik aufgenommene Bilder oder durch Kalibration gewonnene intrinsische oder extrinsische Abbildungsparameter mit an sich bekannten Verfahrensschritten bei der Rekonstruktion, insbesondere ohne Verzerrungen, berücksichtigt werden.

Bei einem weiteren bevorzugten Verfahren werden wenigstens zwei Strukturen auf dem Umfangsrand (des Verschlusses) erfasst und insbesondere zwei voneinander getrennte Strukturen und es wird unter Berücksichtigung wenigstens je eines für diese zwei Strukturen charakteristischen Wertes der für eine Relativposition des Verschlusses gegenüber dem Behältnis und/oder für den Verschluss charakteristische Werte bestimmt.

Daher wird eine weitere Verbesserung durch ein Heranziehen von mehreren Strukturen ermöglicht. Besonders bevorzugt kann eine weitere Verbesserung durch Einbeziehung der Tragringzentrierung und damit eine bessere Rekonstruktion der 360° Abwicklung erfolgen.

Bei einem weiteren bevorzugten Verfahren wird eine Überprüfung und/oder Plausibilisierung der ermittelten Werte vorgenommen. Dies kann beispielsweise erfolgen durch ein Heranziehen eines für einen Verschlusskappensitz, eines für einen Hochstand oder einer ähnliche Eigenschaft charakteristischen Wert erfolgen. Auf diese Weise kann eine Plausibilisierung einer Verschlussdrehwinkelposition erfolgen.

Diese beschriebenen Verfahren sind für generell alle Typen von Verschlüssen geeignet. Bei einem besonders bevorzugten Verfahren ist der Verschluss aus einer Gruppe von Verschlüssen ausgewählt, welche Flatcaps, Sportscaps, Tethered Caps, Schnappverschlüsse und dergleichen enthält. Besonders bevorzugt handelt es sich jedoch um Verschlüsse, die an den Außengewinden des Behältnisses sitzen.

Weiterhin kann das Verfahren angewandt werden, wenn der Verschluss umlaufend nicht gleich aufgebaut ist, d. h. in allen vertikalen Schnitten die gleiche äußere Schnittform nicht beibehält.

Daneben kann es sich auch um Verschlüsse handeln, die mit oder ohne eine Staubkappe ausgebildet sind und/oder mit oder ohne ein Garantieband oder ein Sicherungsband zum Erkennen einer Erstöffnung.

Bei einem weiteren bevorzugten Verfahren enthält die Struktur des Umfangsrandes eine Vielzahl von sich in einer Längsrichtung des Verschlusses (welche insbesondere zu einer Längsrichtung des Behältnisses parallel ist oder mit dieser zusammenfällt) parallel zueinander erstreckende Stege und/oder Linien und/oder Ausnehmungen und/oder Vorsprünge und besonders bevorzugt ist der für die Struktur charakteristische Wert aus einer Gruppe von Werten ausgewählt, welche eine Länge dieser Stege (und/oder Ausnehmungen und/oder Linien), einen Abstand der Stege (und/oder Ausnehmungen und/oder Linien) in Umfangsrichtung, Endpunkte dieser Stege (und/oder Ausnehmungen und/oder Linien), Formelemente an dem Umfangsrand, eine Versteifungsstruktur an dem Verschluss, eine an dem Umfangsrand vorhandene Krempe, Ansatzpunkte einer Verschlussbefestigung und dergleichen enthält. Wie erwähnt, kann auf diese Weise beispielsweise die Rekonstruktion des Verschlusses, ein Sicherungsring, Verbindungselemente und der Tragring zum Erstellen einer 360° Abwicklung verwendet werden.

Besonders bevorzugt werden relevante Strukturparameter erfasst wie etwa ein Mittelwert der Strukturen, eine Elongation, charakteristische Teilstücke und dergleichen.

Besonders bevorzugt werden die so bewerteten Strukturparameter hinsichtlich einer Position oder Schieflage des Verschlusses bewertet. Daneben sind jedoch auch weitere Auswertungen möglich, wie etwa eine Auswertung einer Deformation durch eine Abweichung von einer Referenz oder von einem Referenzstrukturparametersatz.

Bei einem weiteren bevorzugten Verfahren werden die aufgenommenen Bilder mit vorgegebenen Referenzbildern verglichen. Dabei kann es sich um Referenzbilder handeln, welche beispielsweise typisch für die jeweils aufgenommenen Verschlüsse sind oder die von einem solchen Verschluss aufgenommen wurden.

Im weiteren bevorzugten Verfahren können, wie oben erwähnt, beispielsweise horizontale Krempen oder Versteifungsstrukturen aufgenommen und/oder ausgewertet werden.

Bei einem weiteren bevorzugten Verfahren wird zur Bildauswertung eine künstliche Intelligenz eingesetzt. Dabei können insbesondere zur Bildauswertung Vergleiche mit Referenzbildern vorgenommen werden.

Die vorliegende Erfindung ist weiterhin auf eine Vorrichtung zum Inspizieren von mit Verschlüssen versehenen Behältnissen gerichtet, wobei die Verschlüsse einen Deckelabschnitt und einen um eine Mündung der Behältnisse umlaufenden Umfangsrand aufweisen und die Behältnisse ein in einem Bereich der Mündung der Behältnisse angeordnetes rotationssymmetrisches Element (10a) aufweisen und wobei der Verschluss oder die Verschlüsse in einer Längsrichtung des Behältnisses oberhalb des rotationssymmetrischen Elements endet.

Diese Vorrichtung weist eine insbesondere einbahnige Transporteinrichtung auf, welche die Behältnisse entlang eines vorgegebenen Transportpfads transportiert und eine Beleuchtungseinrichtung, welche die mit den Verschlüssen versehenen Mündungsbereiche der Behältnisse beleuchtet und/oder dazu geeignet ist. Weiterhin ist wenigstens eine Bildaufnahmeeinrichtung vorgesehen, welche dazu geeignet und bestimmt ist, ein oder mehrere ortsaufgelöste Bilder der mit den Verschlüssen versehenen Mündungsbereiche der Behältnisse aufzunehmen.

Erfindungsgemäß ist die wenigstens eine Bildaufnahmeeinrichtung dazu geeignet und bestimmt, wenigstens zwei ortsaufgelöste Bilder eines Abschnitts des Umfangsrandes sowie wenigstens eines Abschnitts des rotationssysmmetrischen Elements aufzunehmen und es ist eine Prozessoreinrichtung vorgesehen, welche dazu geeignet und bestimmt ist, aus wenigstens diesem Bild einen für eine Relativposition des Verschlusses gegenüber dem Behältnis charakteristischen Wert (und/oder einen für den Verschluss selbst charakteristischen Wert) zu bestimmen.

Dabei wird diese Gesamtinformation und/oder der charakteristische Wert mittels einer aus den Bildern bestimmten Position des rotationssymmetrischen Elements korrigiert und/oder ist entsprechend korrigierbar.

Eine weitere erfindungsgemäße Vorrichtung zum Inspizieren von mit Verschlüssen versehenen Behältnissen, wobei die Verschlüsse einen Deckelabschnitt und einen um eine Mündung der Behältnisse umlaufenden Umfangsrand aufweisen, weist eine Transporteinrichtung auf, welche die Behältnisse entlang eines vorgegebenen Transportpfads transportiert, sowie eine Beleuchtungseinrichtung, welche die mit den Verschlüssen versehenen Mündungsbereiche der Behältnisse beleuchtet und wenigstens eine Bildaufnahmeeinrichtung, welche dazu geeignet und bestimmt ist, wenigstens ein ortsaufgelöstes Bild der mit den Verschlüssen versehenen Mündungsbereiche der Behältnisse aufzunehmen.

Erfindungsgemäß ist eine Prozessoreinrichtung vorgesehen, welche dazu geeignet und bestimmt ist, aus einer in diesem Bild erfassten (insbesondere sichtbaren) Struktur des Umfangsrandes eine für eine Relativposition des Verschlusses gegenüber dem Behältnis und/oder einen für den Verschluss charakteristischen Wert zu bestimmen.

Bevorzugt handelt es sich bei der Transporteinrichtung um ein Transportband, insbesondere ein Transportband, auf welchem die zu inspizierenden Behältnisse stehend transportiert werden. Dabei weist dieses Transportband besonders bevorzugt Führungseinrichtungen auf, welche die Transportbewegung und/oder die Behältnisse während ihres Transports führen. Diese Führungseinrichtungen können dabei insbesondere ein seitliches Verschieben des Behältnisses auf dem Transportband verhindern. Bei einer besonders bevorzugten Ausführungsform ist die Prozessoreinrichtung dazu geeignet und bestimmt, einen für eine Position und/oder Lage des Tragrings charakteristischen Wert zu bestimmen. Insbesondere wird hierbei ein Normalenvektor bestimmt. Besonders bevorzugt wird dieser charakteristische Wert verwendet, um einen korrekten Sitz des Tragrings auszuwerten und/oder um den Sitz des Tragrings und/oder den Sitz des Verschlusses an dem Behältnis zu überprüfen.

Besonders bevorzugt weist die Vorrichtung wenigstens zwei, bevorzugt wenigstens drei und bevorzugt wenigstens vier Bildaufnahmeeinrichtungen auf. Bevorzugt sind diese Bildaufnahmeeinrichtungen jeweils auf die Mündungen und/oder die Verschlüsse der Behältnisse ausgerichtet. Daneben wäre jedoch eine Aufnahme auch unter Verwendung von Spiegeln ggf. mit der gleichen Bildaufnahmeeinrichtung möglich.

Besonders bevorzugt ist die Prozessoreinrichtung zu Kontrasterhöhung eines aufgenommenen Bildes geeignet und bestimmt. Hierbei wird beispielsweise eine Vorverarbeitung eines aufgenommenen Bildes vorgenommen, um dessen Kontraste zu erhöhen.

Weitere Vorteile und Ausführungsformen ergeben sich aus den beigefügten Zeichnungen:

### Darin zeigen:

- Fig. 1: eine Darstellung zur Veranschaulichung der der Erfindung zugrundeliegenden Gegebenheiten;
- Fig. 2: im Rahmen einer Inspektion aufgenommene Bilder;
- Fig. 3: Beispiele von aufgenommenen Bildern;
- Fig. 4: eine Abwicklung der in Fig. 3 aufgenommenen Bilder;
- Fig. 5: eine Darstellung zur Vorverarbeitung der aufgenommenen Bilder;
- Fig. 6: eine Darstellung zur Bestimmung der Strukturen;
- Fig. 7: eine Darstellung bei Vorhandensein mehrerer Strukturen;
- Fig. 8: eine Darstellung zur Auswertung eines in Fig. 7 gezeigten Bildes;
- Fig. 9: eine Darstellung zu einer Aufnahme und einer Abwicklung ohne Korrektur;
- Fig. 10: eine Darstellung zu einer Aufnahme und einer Abwicklung mit Korrektur;
- Fig. 11: erhaltene Messergebnisse ohne Korrektur;
- Fig. 12: erhaltene Messergebnisse mit Korrektur; und
- Fig. 13: eine grob schematische Darstellung einer Vorrichtung zum Inspizieren von Behältnissen.

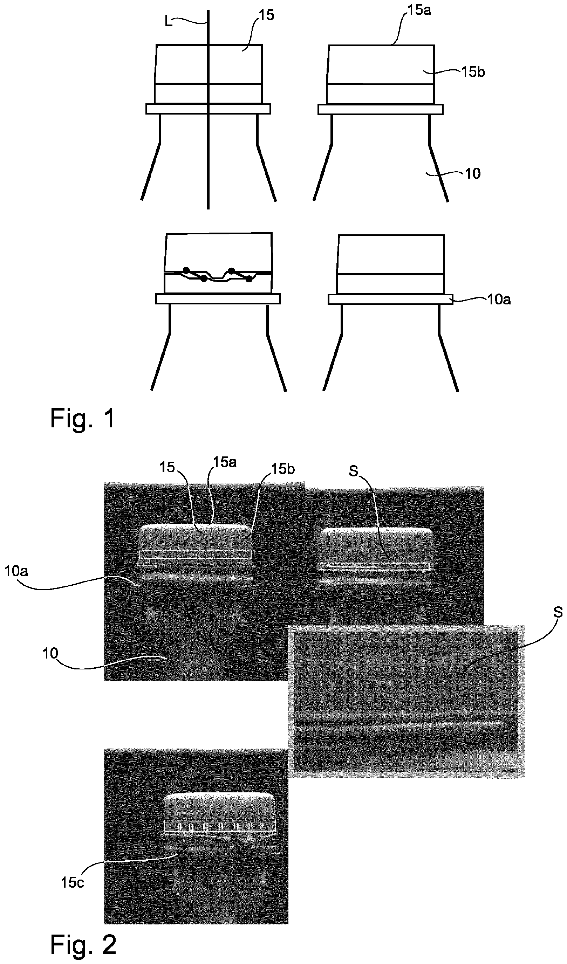

Fig. 1 zeigt vier Darstellungen eines Behältnisses, hier eines Kunststoffbehältnisses 10 mit einem Behältnisverschluss 15. Bevorzugt ist dieser Behältnisverschluss 15 auf eine Mündung des Behältnisses 10 aufgeschraubt.

Das Bezugszeichen L bezieht sich auf eine Längsrichtung des Behältnisses sowie auch auf eine Längsrichtung des Behältnisverschlusses 15.

Der Behältnisverschluss weist einen Deckelabschnitt 15a sowie einen Umfangsrand 15b auf. An dem Umfangsrand 15b kann eine Struktur ausgebildet sein (nicht gezeigt).

Das Bezugszeichen 10a bezieht sich auf einen an dem Behältnis 10 angeordneten Tragring. Dieser wird, wie unten dargestellt bevorzugt ebenso mit aufgenommen.

Fig. 2 zeigt ein tatsächliches von einem Behältnisverschluss aufgenommenes Bild, wobei das untere Bild auf der rechten Seite eine Vergrößerung zeigt. Auch hier ist wiederum der Deckelabschnitt 15a und der Umfangsrand erkennbar. Daneben ist auch ein Sicherungsring 15c erkennbar, welches eine Feststellung ermöglicht, ob das Behältnis bereits geöffnet wurde.

Weiterhin erkennt man auch eine Struktur S am Umfangsrand des Behältnisverschlusses. Diese kann Struktur kann ebenfalls genutzt werden um einen Verschlusszustand des Behältnisses zu bestimmen.

Eine weitere Verbesserung der Bildauswertung ist durch Heranziehen von mehreren Strukturen möglich. Daneben ist auch, wie oben ausgeführt, eine Einbeziehung der Tragringzentrierung und damit bessere Rekonstruktion der 360° Abwicklung möglich.

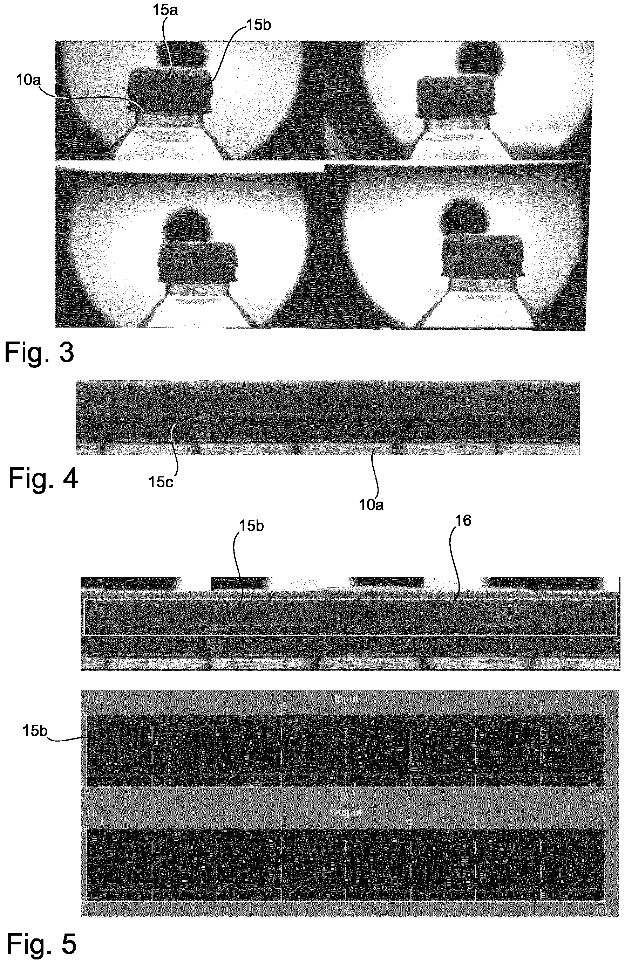

Fig. 3 zeigt ein Beispiel, bei dem vier Bilder eines Behältnisverschlusses aufgenommen wurden. Dabei kann diese Aufnahme beispielsweise mittels vier Kameras von unterschiedlichen Seiten erfolgen. Hier erfolgte eine Kameraaufnahme in etwa in einer 90° Anordnung.

Fig. 4 zeigt eine Rekonstruktion der Verschlusskappe des Sicherungsrings, der Verbindungselemente und des Tragering in einer 360° Abwicklung. Bei dieser Abwicklung ist sowohl der Sicherungsring 15c als auch der Tragring 10a erkennbar

Fig. 5 zeigt erneut das in Fig. 4 wiedergegebene Bild, wobei ein Bereich 16 dargestellt ist, in den Strukturen auf dem Umfangsrand 15b ausgewertet werden. In dem unteren Teilbild von Fig. 5 sind Massnahmen gezeigt, die zur Kontrastanreicherung dienen. Daneben wird bevorzugt in diesem Schritt der Bildauswertung eine Vorverarbeitung des Bildes vorgenommen.

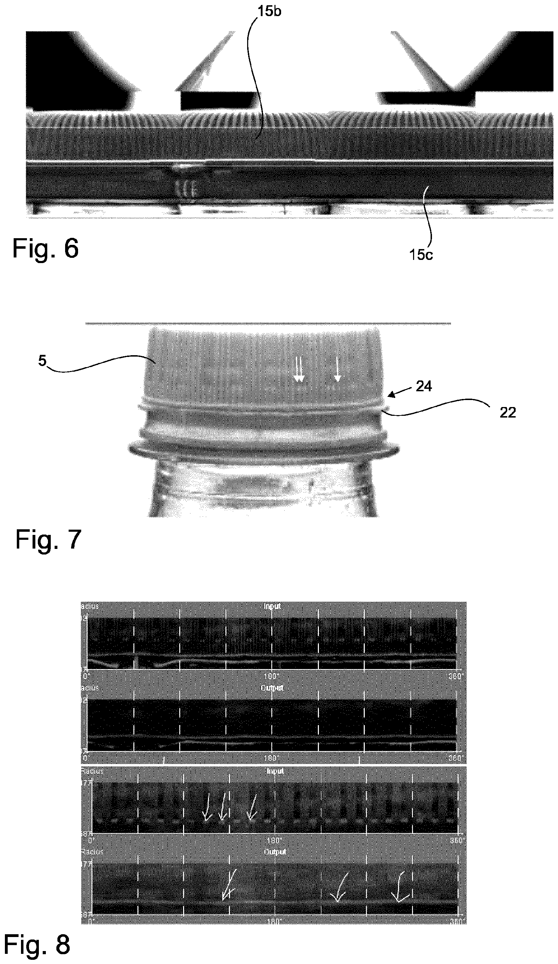

Fig. 6 zeigt einen vergrößerten Abschnitt eines aufgenommenen Bildes. Aus diesem Bild können relevante Strukturdaten des Umfangsrands ermittelt.

Aus diesem Bild eine Bestimmung der relevanten Struktur des Umfangsrandes erfolgen. Genauer erfolgt hier die Bestimmung anhand der gezeigten Abwicklung d.h. es wird eine 360° - Struktur ausgewertet. Vorteilhaft erfolgt eine Bestimmung bzw. ein Registrieren von relevanten Strukturparameter wie Mittelwert, Elongation, charakteristische Teilstücke, usw.

Bevorzugt erfolgt Bewerten der gewonnenen Strukturparameter hinsichtlich Position und/oder Schieflage. Daneben sind auch weitere Auswertungen möglich, wie hinsichtlich einer Deformation insbesondere durch Abweichen von einem Referenz Struktur Parametersatz.

Fig. 7 zeigt eine Abbildung eines Verschlusses, der mehrere Strukturen aufweist. Man erkennt hier eine horizontale Krempe 22 sowie auch eine Versteifungsstruktur 24 des Verschlusskappen Randes. Weiterhin erkennt man, dass die Endpunkte der kurzen Rippen glänzen. Diese Informationen können ebenfalls zur Bildauswertung und letztlich zur Erfassung einer Stellung des Verschlusses verwendet werden.

Fig. 8 zeigt eine Darstellung der Bildauswertung des in Fig. 7 aufgenommenen Bildes. In dem oberen Teilbild wurde eine Kontrastverbesserung vorgenommen, um eine horizontale Krempe besser hervorzuhaben.

Das untere Bild zeigt ebenfalls eine Kontrasterhöhung zur Bestimmung der Endpunkte der kurzen Rippen.

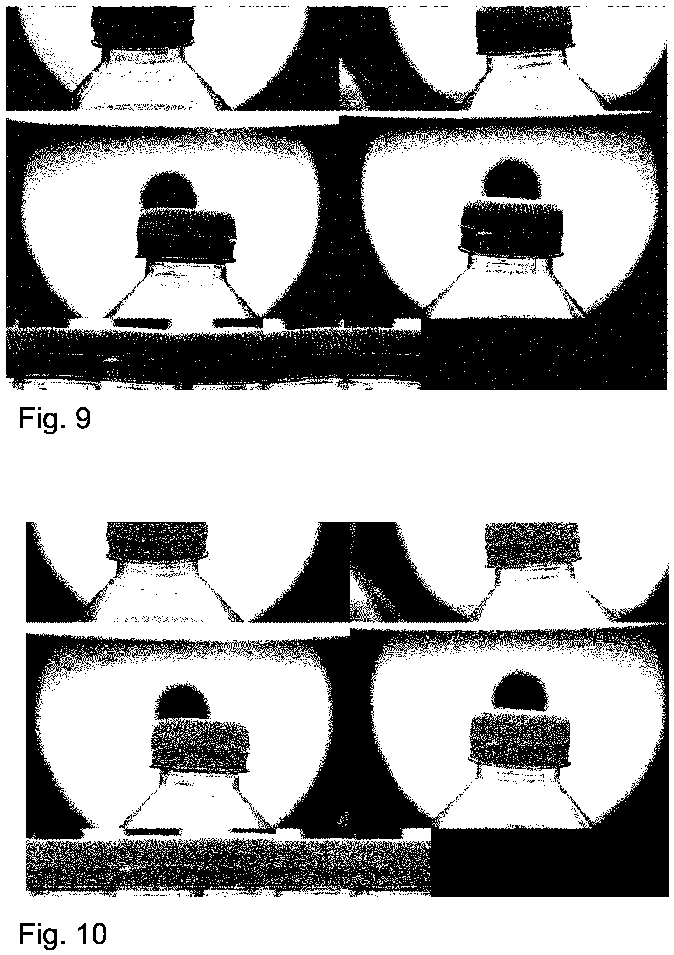

Die Fig. 9 und 10 zeigen jeweils vier aufgenommene Bilder eines Behältnisverschlusses, d.h. aus vier Richtungen aufgenommene Bilder. Man erkennt hier, dass die Ausrichtung dieser Verschlüsse nicht genau einheitlich ist, beispielsweise weil das Behältnis einen leicht schiefen Hals aufweist.

In beiden Bildern wurde eine 360° Abwicklung vorgenommen, die jeweils in dem unteren Abschnitt des Bildes gezeigt wurde. In dem in Fig. 9 gezeigten Fall wurde dabei keine Korrektur vorgenommen, was zu einer schlangenlinienartigen Darstellung führt.

Bei der in Fig. 10 gezeigten Darstellung wurde eine Korrektur anhand der Position des Tragrings durchgeführt, was zu de, entsprechenden geraden Verlauf führt.

Genauer wurde im Fall von Fig. 10 eine Bestimmung der Ebenenlage bzw. des Normalenvektors des Tragrings durchgeführt.

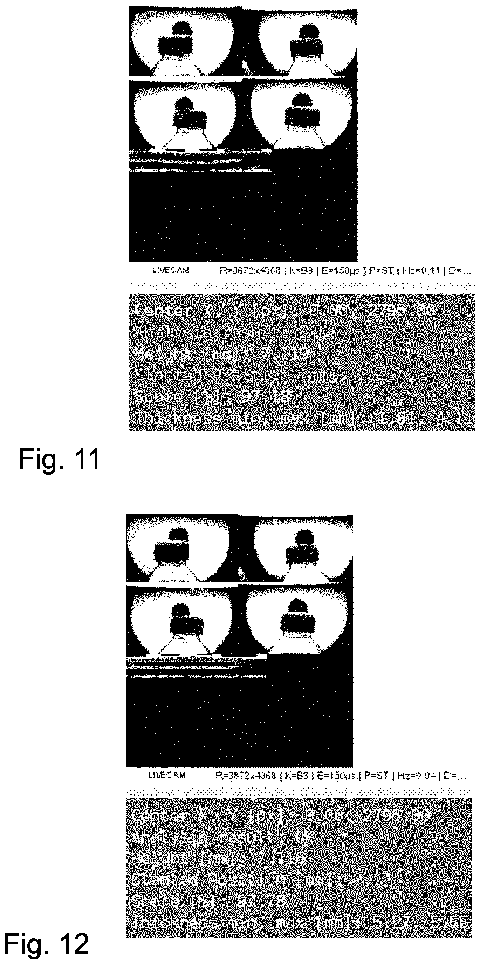

Die Fig. 11 und 12 zeigen wiederum die entsprechenden Bilder gemeinsam mit der sich ergebenden Auswertung. Während die Auswertung ohne Korrektur (Fig. 11) zu dem Ergebnis führ, dass das Behältnis fehlerhaft ist (BAD) führt die Auswertung mit Korrektur (Fig. 12) dazu, dass das Behältnis als ordnungsgemäß (OK) bewertet wird.

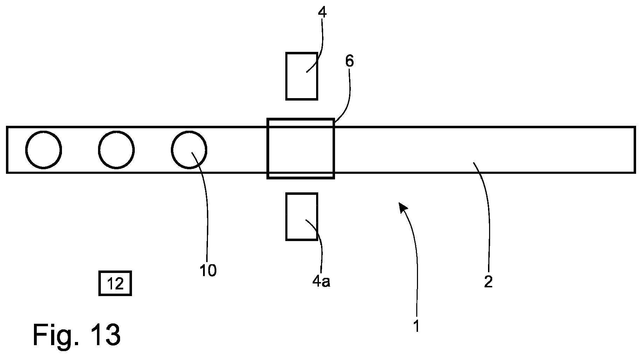

Fig. 13 zeigt eine grob schematische Darstellung einer erfindungsgemäßen Vorrichtung 1 zum Inspizieren von Behältnissen 10. Diese Vorrichtung weist eine Transporteinrichtung wie etwa ein Transportband 2 auf, welches die Behältnisse 10 entlang eines vorgegebenen Transportpfads, hier eines geradlinigen Transportpfads transportiert.

Die Bezugszeichen 4 und 4a beziehen sich auf Bildaufnahmeeinrichtungen, welche jeweils Bilder der befüllten und verschlossenen Behältnisse 10 aufnehmen. Vorteilhaft sind vier solcher Bildaufnahmeeinrichtungen 4, 4a vorgesehen, welche besonders bevorzugt insgesamt jeweils vier Bilder der Behältnisse aus unterschiedlichen Richtungen aufnehmen.

Die Bezugszeichen 6 beziehen sich auf Beleuchtungseinrichtungen, welche bevorzugt den Bildaufnahmeeinrichtungen zugeordnet sind und welche die Behältnisse 10 zumindest während der Bildaufnahme beleuchten.

Das Bezugszeichen 12 kennzeichnet schematische eine Auswerteeinrichtung, welche die von der oder den Bildaufnahmeeinrichtungen aufgenommenen Bilder auswertet und dabei bevorzugt auch die oben beschriebenen Korrekturen durchführt.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Inspizieren von mit Verschlüssen (15) versehenen Behältnissen (10) wobei die Verschlüsse einen Deckelabschnitt (15a) und einen um eine Mündung der Behältnisse (10) umlaufenden Umfangsrand (15b) aufweisen und die Behältnisse ein in einem Bereich der Mündung der Behältnisse angeordnetes rotationssymmetrisches Element (10a) aufweisen, wobei der Verschluss in einer Längsrichtung des Behältnisses (L) oberhalb des rotationssymmetrischen Elements endet, wobei die Behältnisse (10) mittels einer Transporteinrichtung (2) entlang eines vorgegebenen Transportpfads transportiert werden und während dieses Transports die mit den Verschlüssen (15) versehenen Mündungsbereiche der Behältnisse von einer Beleuchtungseinrichtung (6) beleuchtet werden und wenigstens eine Bildaufnahmeeinrichtung (4) wenigstens zwei Bilder der mit den Verschlüssen (15) versehenen Mündungsbereiche der Behältnisse (10) aufnimmt,
**dadurch gekennzeichnet, dass**
die Bildaufnahmeeinrichtung wenigstens zwei ortsaufgelöste Bilder eines Abschnitts des Umfangsrandes (15b) sowie wenigstens eines Abschnitts des rotationssysmmetrischen Elements aufnimmt und wenigstens aus diesen Bildern eine Gesamtinformation abgeleitet wird wobei aus wenigstens diesen Bildern ein für eine Relativposition des Verschlusses (15) gegenüber dem Behältnis (10) charakteristischer Wert bestimmt wird, wobei diese Gesamtinformation und/oder der charakteristische Wert mittels einer aus den Bildern bestimmten Position des rotationssymmetrischen Elements korrigiert wird.

2. Verfahren nach Anspruch 1,
**dadurch gekennzeichnet, dass**
der Abschnitt des Umfangsrandes und/oder des rotationssymmetrischen Elements einen Winkel einschließt der größer ist als 90°, bevorzugt größer als 120°, bevorzugt größer als 140°, bevorzugt größer als 180°, bevorzugt größer als 220°, bevorzugt größer als 270° und besonders bevorzugt größer als 300° und besonders bevorzugt größer als 330°.

3. Verfahren nach wenigstens einem der vorangegangenen Ansprüche,
**dadurch gekennzeichnet, dass**
das rotationssysmmetrische Element aus einer Gruppe von rotationssysmmetrischen Elementen ausgewählt ist, welche einen Tragring eines Kunststoffbehältnisses, eine Mündungseichel, insbesondere eines Glasbehältnisses, ein Gewindemundstück, insbesondere eines Glasbehältnisses, eine umlaufende Ausnehmung zum Greifen des Behältnisses, einen Sicherungsring und dergleichen enthält.

4. Verfahren nach wenigstens einem der vorangegangenen Ansprüche,
**dadurch gekennzeichnet, dass**
wenigstens eine zweite Bildaufnahmeeinrichtung (4a) wenigstens ein ortsaufgelöstes Bild eines Abschnitts des Umfangsrandes (15b) und/oder wenigstens eines Abschnitts des rotationssymmetrischen Elements aufnimmt.

5. Verfahren nach wenigstens einem der vorangegangenen Ansprüche,
**dadurch gekennzeichnet, dass**
wenigstens aus dem von der ersten Bildaufnahmeeinrichtung (4) und dem von der zweiten Bildaufnahmeeinrichtung (4a) aufgenommenen Bild ein Abwicklungsbild gebildet wird.

6. Verfahren nach dem vorangegangenen Anspruch,
**dadurch gekennzeichnet, dass**
aus dem Abwicklungsbild und/oder der Gesamtinformation der für eine Relativposition des Verschlusses (15) gegenüber dem Behältnis (10) charakteristische Wert bestimmt wird.

7. Verfahren nach dem vorangegangenen Anspruch,
**dadurch gekennzeichnet, dass**
das Abwicklungsbild eine 360° Darstellung des Umfangsrandes und/oder des rotationssysmmetrische Elements wiedergibt.

8. Verfahren nach wenigstens einem der vorangegangenen Ansprüche,
**dadurch gekennzeichnet, dass**
die Korrektur mittels einer Position und/oder einer Lage des rotationssymmetrischen Elements durchgeführt wird, wobei bevorzugt ein Normalenvektor bestimmt wird.

9. Verfahren nach wenigstens einem der vorangegangenen Ansprüche,
**dadurch gekennzeichnet, dass**
mittels wenigstens drei und bevorzugt mittels wenigstens vier Bildaufnahmeeinrichtungen Bilder des Umfangsrandes und des Verschlusses aufgenommen werden und bevorzugt diese Bilder zu einem Abwicklungsbild zusammengesetzt werden.

10. Verfahren nach wenigstens einem der vorangegangenen Ansprüche,
**dadurch gekennzeichnet, dass**
wenigstens einer Bildaufnahmeeinrichtung die Behältnisse aus einer Richtung aufnimmt, die mit einer senkrecht zu der Längsrichtung des Behältnisses stehenden Richtung einen Winkel von weniger als 30°, bevorzugt weniger als 20°, bevorzugt weniger als 10° einschließt.

11. Verfahren nach wenigstens einem der vorangegangenen Ansprüche,
**dadurch gekennzeichnet, dass**
mit wenigstens einem Bild eine Struktur und/oder eine Außenoberfläche des Umfangsrandes erfasst wird.

12. Vorrichtung zum Inspizieren von mit Verschlüssen (15) versehenen Behältnissen (10) wobei die Verschlüsse einen Deckelabschnitt (15a) und einen um eine Mündung der Behältnisse (10) umlaufenden Umfangsrand (15b) aufweisen und die Behältnisse ein in einem Bereich der Mündung der Behältnisse angeordnetes rotationssymmetrisches Element (10a) aufweisen, wobei der Verschluss in einer Längsrichtung des Behältnisses (L) oberhalb des rotationssymmetrischen Elements endet, mit einer Transporteinrichtung, welche die Behältnisse (10) entlang eines vorgegebenen Transportpfads transportiert und einer Beleuchtungseinrichtung, welche die mit den Verschlüssen (15) versehenen Mündungsbereiche der Behältnisse beleuchtet werden und mit wenigstens einer Bildaufnahmeeinrichtung (4), welche dazu geeignet und bestimmt ist wenigstens ein ortsaufgelöstes Bild der mit den Verschlüssen (15) versehenen Mündungsbereiche der Behältnisse (10) aufzunehmen,
**dadurch gekennzeichnet, dass**
die wenigstens eine Bildaufnahmeeinrichtung dazu geeignet und bestimmt ist wenigstens zwei ortsaufgelöste Bilder eines Abschnitts des Umfangsrandes (15b) sowie wenigstens eines Abschnitts des rotationssymmetrischen Elements aufzunehmen und eine Prozessoreinrichtung vorgesehen ist, welche dazu geeignet und bestimmt ist aus diesen wenigstens zwei aufgenommenen Bilder eine Gesamtinformation abzuleiten und aus wenigstens diesen Bildern einen für eine Relativposition des Verschlusses (15) gegenüber dem Behältnis (10) charakteristischen Wert zu bestimmen, wobei diese Gesamtinformation und/oder der charakteristische Wert mittels einer aus den Bildern bestimmten Position des rotationssymmetrischen Elements korrigiert wird.

13. Vorrichtung (1) nach dem vorangegangenen Anspruch,
**dadurch gekennzeichnet, dass**
die Prozessoreinrichtung dazu geeignet und bestimmt ist, einen für eine Position und/oder Lage des Tragrings charakteristischen Wert zu bestimmen.

14. Vorrichtung (1) nach wenigstens einem der vorangegangenen Ansprüche,
**dadurch gekennzeichnet, dass**
die Vorrichtung wenigstens zwei, bevorzugt wenigstens drei und bevorzugt wenigstens vier Bildaufnahmeeinrichtungen aufweist.
